# EUROPÄISCHE PATENTANMELDUNG

(11) **EP 4 682 917 A1**
(43) Veröffentlichungstag der Anmeldung: **21.01.2026**
(21) Anmeldenummer: 24188784.3
(22) Anmeldetag: 16.07.2024
(51) Int. Cl.: H01F 7/02, H01F 41/02, H02K 15/03

(54) **MAGNET FÜR EINE PERMANENTERREGTE SYNCHRONMASCHINE**

(71) Anmelder: Siemens Aktiengesellschaft, 80333 München (DE)
(72) Erfinder: Schunk, Holger, 97461 Lendershausen (DE); Wehner, Andreas, 97688 Bad Kissingen (DE)
(74) Vertreter: Siemens Patent Attorneys

(57) **Zusammenfassung**

Die Erfindung betrifft einen Magneten (10, 202, 203, 206) für eine permanenterregte Synchronmaschine (33), aufweisend wenigstens einen Einschnitt (12A, 12B, 12C, 12D, 22), wobei der Einschnitt (12A, 12B, 12C, 12D, 22) derart angeordnet ist, dass Wirbelstrompfade (13A, 13B, 13C, 13D, 23A, 23B) wenigstens teilweise unterbrochen sind.

## Beschreibung

Die Erfindung betrifft einen Magnet für eine permanenterregte Synchronmaschine.

Insbesondere durch Wirbelströme erwärmen sich Permanentmagnete in permanenterregten Sychronmaschinen. Durch die Erwärmung werden die abgegebene Leistung und die maximale Drehzahl limitiert bzw. herabgesetzt. Zudem besteht bei einer Erwärmung der Permanentmagnete die Gefahr, dass diese ganz oder wenigstens teilweise entmagnetisiert werden, was dazu führt, dass die Maschine nicht mehr funktioniert.

Bisher wurde einer Erwärmung der Permanentmagnete dadurch entgegengewirkt, dass diejenigen Magnete, in denen sehr viele Verluste durch Wirbelströme entstanden, geteilt und anschließend wieder zusammengefügt wurden. Das Zusammenfügen gelang meist mittels einer Klebung.

Das Teilen von Magneten und das anschließende Zusammenfügen verbessert zwar die Problematik hinsichtlich der Wirbelströme, ist allerdings aufwändig und teuer.

Durch die Klebeschicht verschlechtert sich ferner das magnetische Moment.

Aufgrund mangelnder Temperaturfestigkeit des Klebstoffes kann zudem die Lebensdauer der Magnete beeinträchtigt sein, da es zu Brüchen der Klebung kommen kann oder auch zu Brüchen an der Klebestelle kommen kann.

Der Erfindung liegt die Aufgabe zugrunde, Wirbelstromverluste zu minimieren und dabei stabile Magnete zu gewährleisten.

Die Lösung der Aufgabe gelingt durch Anspruch 1, d.h. einen Magneten für eine permanenterregte Synchronmaschine, aufweisend wenigstens einen Einschnitt, wobei der Einschnitt derart angeordnet ist, dass Wirbelstrompfade wenigstens teilweise unterbrochen sind.

Der Einschnitt erfolgt vorzugsweise quer zum erregenden Feld entweder in Breiten- und/oder in Längsrichtung.

Der Einschnitt ist vorzugsweise wenigstens 0,1 mm breit, höchstens 0,3 mm. In einer besonders bevorzugten Ausführung ist der Einschnitt wenigstens 0,15 mm und höchstens 0,2 mm breit.

Um eine bessere mechanische Belastbarkeit zu gewährleisten, kann der Einschnitt mit einem Material gefüllt werden. Das Material gewährleistet vorteilhaft noch immer die Unterbrechung der Wirbelstrompfade. Hierfür eignet sich beispielsweise ein Klebstoff und/oder Kunststoff aufweisendes Material.

Der Einschnitt ist vorzugsweise dergestalt, dass der Magnet von einer Oberseite zu einer Unterseite vollständig durchtrennt ist.

Vorteilhaft ist eine Ausführung, wonach der Magnet teilweise und/oder abschnittsweise von einer ersten Seite in Richtung einer gegenüberliegenden Seite durchtrennt ist.

Vorzugsweise wird hierzu der Magnet von einer ersten Seite bzw. Seitenkante in Richtung einer gegenüberliegenden Seite bzw. Seitenkante durchtrennt. Gedanklich ist hierbei beispielsweise eine Schnittlinie vorhanden, an welcher sich der Einschnitt orientiert. Der Magnet wird jedoch nicht zur Gänze von einer ersten Seitenkante zu einer gegenüberliegenden Seitenkante durchschnitten.

Vorteilhaft ist zudem eine Ausführung, wonach der Einschnitt in einem Winkel von wenigstens im Wesentlichen 90° zur Seitenkante des Magneten angeordnet ist.

Der Magnet kann beispielsweise lediglich einen Einschnitt umfassen.

Dieser eine Einschnitt reicht beispielsweise von einer ersten Seitenkante des Magneten bis zu einer Stelle die, bezogen auf die gesamte Magnetlänge in dieser Richtung nach wenigstens 60% und 90% der Magnetlänge lokalisiert ist.

Auf diese Weise werden die wesentlichen Wirbelstrombahnen unterbrochen, der Magnet ist jedoch noch ein Teil mit einem Einschnitt und es bedarf keiner Klebung. Dies ist besonders aufwandsarm. Durch die fehlende Klebung sind auch keine Brüche der Klebung, beispielsweise verursacht durch Wärmeeintrag oder Alterung, zu erwarten.

Insbesondere durch Drahtschneiden ist der Einschnitt leicht bewerkstelligbar. Auch andere sind denkbar.

Drahtschneiden ist eine spezielle Methode zur Metallbearbeitung, insbesondere das Drahterodieren oder Funkenerodieren. Hierbei handelt es sich vorteilhaft um ein Verfahren der Elektrofunkenerosion (EDM - Electrical Discharge Machining), bei dem ein elektrischer Draht als Elektrode verwendet wird, um präzise Schnitte in leitfähige Materialien zu machen.

Drahtschneiden bzw. Drahterodieren zeichnet sich insbesondere durch eine hohe Präzision aus. Dieses Verfahren ermöglicht extrem präzise Schnitte, die mit traditionellen mechanischen Methoden schwer zu erreichen sind.

Da das Schneiden vorteilhaft durch elektrische Entladungen erfolgt und nicht durch mechanische Krafteinwirkung, wird das Werkstück nicht mechanisch belastet. Es können sehr komplexe und feine Formen geschnitten werden, die mit anderen Methoden schwer herzustellen wären.

Materialien, die extrem hart oder schwierig zu bearbeiten sind, wie gehärteter Stahl oder Titan, können leicht bearbeitet werden.

Drahtschneiden bezeichnet ein hochpräzises Bearbeitungsverfahren, das häufig in der Werkzeug- und Formenbauindustrie eingesetzt wird, um komplizierte und präzise Formen und Schnitte zu realisieren.

Es sind jedoch auch andere Verfahren möglich.

Der Magnet kann auch andere Formen eines Einschnitts oder mehrerer Einschnitte aufweisen.

Vorteilhaft ist hierbei eine Ausführungsform, wonach der Magnet wenigstens teilweise entlang zweier gedachter Schnittlinien eingeschnitten ist, wobei eine erste Schnittlinie von einer ersten Seitenkante zu einer zweiten Seitenkante reicht und eine zweite Schnittlinie von einer dritten Seitenkante des Magneten zu einer vierten Seitenkante reicht.

Die Schnittlinien werden vorzugsweise nicht komplett ein- und durchgeschnitten. Dort, wo sich die Schnittlinien kreuzen, liegt vorzugsweise ein 90° Winkel zwischen den Schnittlinien vor.

Vorzugsweise schneiden die sich orthogonal. Auch andere Winkel, kleiner oder größer 90 °, beispielsweise wenigstens 70° und höchstens 110°, sind möglich.

Ein Einschnitt entlang der ersten Schnittlinie wird hierbei, vorzugsweise von der ersten Seitenkante in Richtung der Mitte sowie von der zweiten Seitenkante in Richtung der Mitte realisiert.

Mittig bleibt jedoch vorteilhaft ein Bereich, in welchem kein Einschnitt vorhanden ist. Dieser Bereich in welchem kein Einschnitt vorhanden ist, beträgt vorzugsweise wenigstens 10% und höchstens 40% der Magnetlänge in dieser Richtung. Analog wird mit der zweiten Schnittlinie verfahren.

Auch andere Schnittformen und Muster sind möglich. Der Magnet kann verschiedene Formen haben, wie z.B. Schalen, Plättchen, Brotlaib, Schalen mit unterschiedlichen Innen- und Außenradien.

Die Lösung der Aufgabe gelingt ferner durch ein Verfahren zur Herstellung eines Magneten, wobei der wenigstens eine Einschnitt mittels Drahtschneiden ausgeführt wird.

Ferner gelingt die Lösung der Aufgabe durch eine dynamoelektrische rotatorische Maschine, insbesondere permanenterregte Synchronmaschine, aufweisend wenigstens einen derartigen Magneten.

Vorzugsweise weist die dynamoelektrische rotatorische Maschine eine Mehrzahl an derartigen Magneten auf.

Die Erfindung löst die oben genannten Probleme, indem der Magnet nicht vollständig durchschnitten wird, sondern von den Seiten ein Stück nach innen eingeschnitten wird. Dies hat den Vorteil, dass die wichtigsten Wirbelstrombahnen unterbrochen werden, der Magnet aber noch als ein Teil gehandhabt werden kann. Der sehr aufwändige Klebeprozess entfällt dadurch.

Vorzugsweise wird der Einschnitt bzw. werden die Einschnitte durch Drahtschneiden hergestellt, dadurch ist es sehr leicht machbar die in den Figuren dargestellten Schnittkonturen zu schneiden, dies ist für vorzugsweise alle Magnetformen möglich.

Im Folgenden wird die Erfindung anhand der in den Figuren dargestellten Ausführungsbeispiele näher beschrieben und erläutert. Es zeigen
- FIG 1: einen Magneten,
- FIG 2 und FIG 3: segmentierte Magnete,
- FIG 4 und FIG 6: Ausgestaltungen eines erfindungsgemäßen Magneten
- FIG 5: eine dynamoelektrische rotatorische Maschine, insbesondere permanenterregte Synchronmaschine, und
- FIG 7: die Schnittlinien für das in FIG 4 gezeigte Schnittmuster.

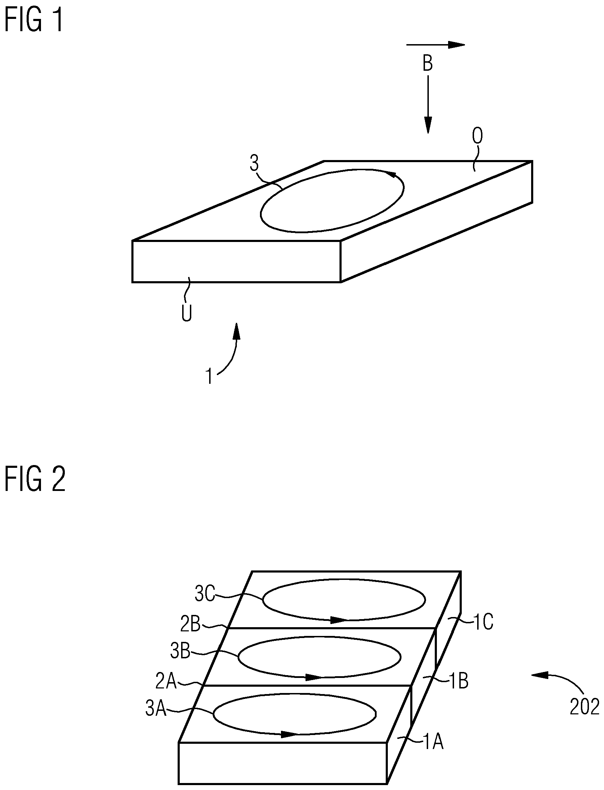

Die FIG 1 zeigt einen Permanentmagneten 1 nach dem Stand der Technik. Ein Wirbelstrompfad 3 ist dargestellt sowie auch die magnetische Feldstärke B.

FIG 2 zeigt einen weiteren Permanentmagneten 202 aus dem Stand der Technik mit einer Oberseite O und einer Unterseite U.

Der Permanentmagnet 202 ist segmentiert in die einzelnen Segmente 1A, 1B und 1C. Der Permanentmagnet 202 wurde vollständig durchgeschnitten und anschließend wieder zusammengefügt, beispielsweise geklebt.

Die Schnittkanten sind mit 2A und 2B gekennzeichnet. Die Wirbelströme in den einzelnen Segmenten 1A bis 1C sind mit 3A, 3B und 3C gekennzeichnet.

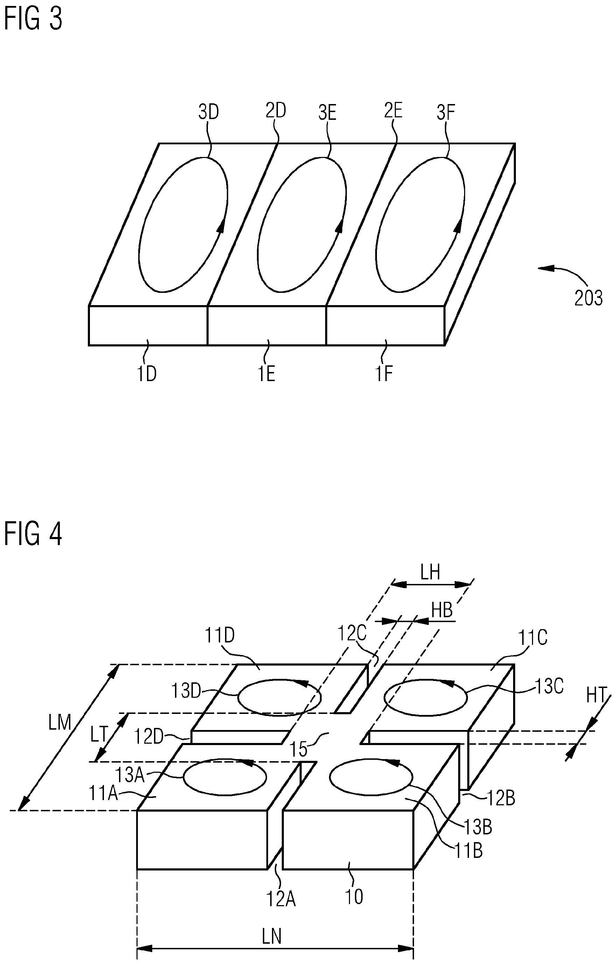

Vorzugsweise erfolgt eine Teilung von Magneten quer zum erregenden Feld, entweder in Breiten oder in Längsrichtung. Somit zeigt FIG 3 eine alternative Ausgestaltung aus dem Stand der Technik.

Der Permanentmagnet 203 weist die Segmente 1D, 1E und 1F auf, die auseinandergeschnitten wurden und anschließend zusammengefügt wurden. Dies zeigen die Schnittkanten 2D und 2E. Der Flusspfad der Wirbelströme ist mit 3D, 3E und3F gekennzeichnet.

Nachteilig an der Ausgestaltung in FIG 2 sowie in FIG 3 ist, dass das Teilen und anschließende Zusammenfügen von Magneten aufwändig und teuer ist. Durch eine Klebeschicht zwischen den einzelnen Segmenten verschlechtert sich das magnetische Moment der Magnete 202 und 203.

Aufgrund mangelnder Temperaturfestigkeit des Klebstoffes kann es über die Lebensdauer zu Brüchen der Klebung kommen und somit zu einem schadhaften Magneten.

FIG 4 zeigt eine vorteilhafte Ausgestaltung des erfindungsgemäßen Magneten.

Der dort gezeigte Magnet 10 weist vier Einschnitte 12A, 12B, 12C und 12D auf. Die Einschnitte 12A, 12B, 12C und 12D reichen jedoch nicht von einer Seite zu einer anderen Seite des Magneten. Der Magnet 10 ist somit nicht zur Gänze, wie in den Figuren 2 und 3 gezeigt, geteilt.

Es findet sich immer eine Stelle 15 am Magneten, an welcher kein Einschnitt zur Teilung des Magneten 10 ausgebildet ist.

Der Magnet 10 wird nicht vollständig durchgeschnitten und in Segmente aufgeteilt, sondern lediglich von wenigstens einer Seite in Richtung der, beispielsweise gegenüberliegenden Seite, eingeschnitten, also insbesondere von außen nach innen.

Vorteilhaft erfolgt keine Klebung in an den Schnittflächen. Durch die Einschnitte werden die Wirbelstrombahnen durchschnitten, die zu einer Erwärmung des Magneten beitragen.

Das aufwändige Teilen und Zusammenfügen von Magneten entfallen. Es ist mit keiner Verschlechterung des magnetischen Moments zurechnen, da keine Klebeschicht vorgesehen ist.

Der Magnet ist vorteilhaft temperaturfest.

Vorzugsweise werden die Einschnitte durch Drahtschneiden bewerkstelligt, die vorzugsweise geradlinigen Konturen sind dadurch besonders leicht herstellbar.

Ein Grundkörper des Magneten 10 kann verschiedene Formen haben.

Die Erfindung ist beispielsweise anwendbar bei randabgesenkten Permanentmagneten, Scheibenmagneten sowie verschiedene andere Magnetformen.

FIG 4 zeigt die Bereiche 11A, 11B, 11C und 11D sowie mit den zugehörigen Wirbelstrompfaden 13A bis 13D, die durch die Einschnitte 12A bis 12D gebildet wurden. Die Bereiche 11A bis 11D sind jedoch nicht in der gleichen Weise vollständig voneinander abgetrennt, wie in den Figuren 2 und 3 ersichtlich, sondern lediglich die wichtigsten Wirbelstrompfade wurden unterbrochen.

Vorzugsweise laufen die Schnitte aufeinander zu, beispielsweise die Schnitte 12A und 12C liegen auf einer Ebene und laufen aufeinander zu, so dass sie gedanklich verbindbar wären. Zwischen den beiden Einschnitten im Bereich 15, befindet sich jedoch eine Länge LT. Zwischen den Schnitten 12B und 12D befindet sich im Bereich 15 ein nicht geschnittener Bereich mit einer Länge LH.

Ein Abstand LT zwischen 12A und 12C ist wenigstens 40% und 10% und höchstens 40% der Gesamtmagnetlänge LM. Ebenso ist ein Abstand LN der aufeinander zulaufenden Einschnittlinien 12D und 12B ebenso zwischen 10% und 40% einer Gesamtmagnetlänge LM groß.

Der Einschnitt ist vorzugsweise wenigstens 0,1 mm breit, höchstens 0,3 mm, siehe Einschnittbreite HB bzw. HT. In einer besonders bevorzugten Ausführung ist der Einschnitt wenigstens 0,15 mm und höchstens 0,2 mm breit.

Um eine bessere mechanische Belastbarkeit zu gewährleisten, kann der Einschnitt mit einem Material gefüllt werden.

Das Material gewährleistet vorteilhaft noch immer die Unterbrechung der Wirbelstrompfade. Hierfür eignet sich beispielsweise ein Klebstoff und/oder Kunststoff aufweisendes Material.

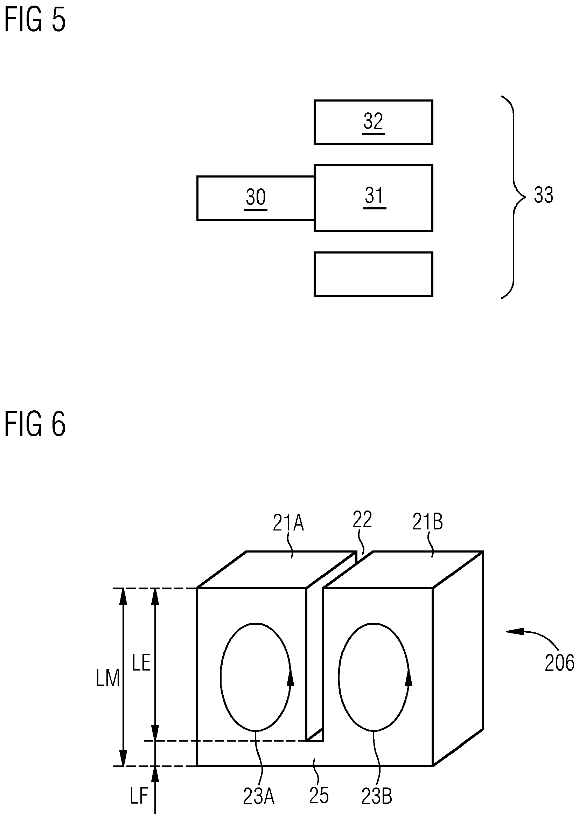

FIG 5 zeigt eine dynamoelektrische rotatorische Maschine 33, insbesondere eine permanenterregte Synchronmaschine, die wenigstens einen Magneten (in FIG 4 oder FIG 6 gezeigt) aufweist.

FIG 5 zeigt eine Welle 30, einen Stator 32 sowie einen Rotor 31 einer Maschine 33.

Eine weitere Ausgestaltung der Erfindung findet sich in FIG 6. Der Magnet 206 weist lediglich einen Einschnitt 22 auf, der von einer Seite des Permanentmagneten bis in Richtung der gegenüberliegenden Seite des Magneten 206 reicht.

Vorteilhaft beträgt eine Länge des Einschnittes LE wenigstens 60% einer Gesamtmagnetlänge LM und maximal 90%. Somit bewegt sich eine Länge, die nicht eingeschnitten wird, zwischen 40% und 10% der Gesamtlänge LM des Magneten LF.

Die Wirbelstrompfade 23A und 23B sind in FIG 6 gekennzeichnet. Ein nicht eingeschnittener Bereich 25 verbindet die einzelnen Teilbereiche 21A und 21B.

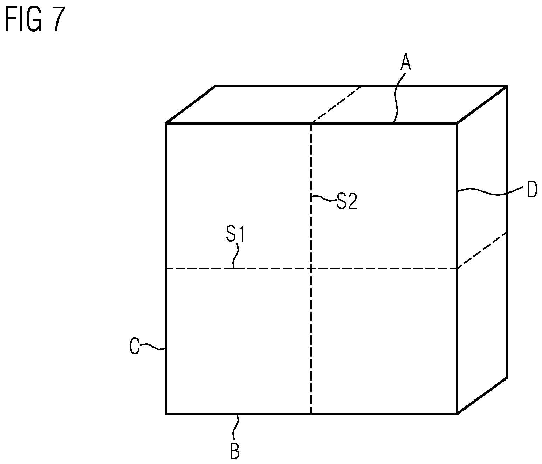

Die FIG 7 zeigt die Schnittlinien S1 und S2 die für das in FIG 4 gezeigte Schnittmuster von Vorteil sind. Auch die Seitenkanten A, B, C und D sind gekennzeichnet.

## Patentansprüche

1. Magnet (10, 202, 203, 206) für eine permanenterregte Synchronmaschine (33), aufweisend wenigstens einen Einschnitt (12A, 12B, 12C, 12D, 22), wobei der Einschnitt (12A, 12B, 12C, 12D, 22) derart angeordnet ist, dass Wirbelstrompfade (13A, 13B, 13C, 13D, 23A, 23B) wenigstens teilweise unterbrochen sind.

2. Magnet (10, 202, 203, 206) nach Anspruch 1, wobei der Magnet (10, 202, 203, 206) von einer Oberseite zu einer Unterseite vollständig durchtrennt ist.

3. Magnet (10, 202, 203, 206) nach einem der vorhergehenden Ansprüche, wobei der Magnet (10, 202, 203, 206) teilweise und/oder abschnittsweise von einer ersten Seite in Richtung einer gegenüberliegenden Seite durchtrennt ist.

4. Magnet (10, 202, 203, 206) nach einem der vorhergehenden Ansprüche, wobei der Einschnitt (12A, 12B, 12C, 12D, 22) in einem Winkel von wenigstens im Wesentlichen 90° zur Seitenkante des Magneten (10, 202, 203, 206) angeordnet ist.

5. Magnet (10, 202, 203, 206) nach einem der vorhergehenden Ansprüche, wobei der Magnet (10, 202, 203, 206) genau einen Einschnitt (12A, 12B, 12C, 12D, 22) aufweist, wobei der genau eine Einschnitt (12A, 12B, 12C, 12D, 22) von einer ersten Seitenkante des Magneten (10, 202, 203, 206) zu einer Stelle reicht, die, bezogen auf eine gesamte Magnetlänge (LM) in dieser Richtung nach wenigstens 60% und 90% der Magnetlänge lokalisiert ist.

6. Magnet (10, 202, 203, 206) nach einem der Ansprüche 1 bis 4, wobei der Magnet (10, 202, 203, 206) wenigstens teilweise entlang zweier gedachter Schnittlinien (A, B, C, D) eingeschnitten ist, wobei eine erste Schnittlinie von einer ersten Seitenkante zu einer zweiten Seitenkante reicht und eine zweite Schnittlinie von einer dritten Seitenkante des Magneten (10, 202, 203, 206) zu einer vierten Seitenkante reicht.

7. Magnet (10, 202, 203, 206) nach Anspruch 6, wobei sich die Schnittlinien (A, B, C, D) orthogonal kreuzen.

8. Magnet (10, 202, 203, 206) nach einem der Ansprüche 6 oder 7, wobei wenigstens 60% und höchstens 90% der Schnittlinie (A, B, C, D) bezogen auf eine Schnittlinienlänge eingeschnitten sind.

9. Verfahren zur Herstellung eines Magneten (10, 202, 203, 206), wobei der wenigstens eine Einschnitt (12A, 12B, 12C, 12D, 22) mittels Drahtschneiden ausgeführt wird.

10. Dynamoelektrische rotatorische Maschine (33), insbesondere permanenterregte Synchronmaschine, aufweisend wenigstens einen Magneten (10, 202, 203, 206) nach einem der Ansprüche 1 bis 8.
